(19) Europäisches Patentamt
European Patent Office
Office européen des brevets

(11) **EP 4 424 652 A1**

(12) **EUROPEAN PATENT APPLICATION**
published in accordance with Art. 153(4) EPC

(43) Date of publication:
04.09.2024 Bulletin 2024/36

(21) Application number: 22886627.3

(22) Date of filing: 05.10.2022

(51) International Patent Classification (IPC):
*C03C 25/1065* [(2018.01)]  *C03C 25/285* [(2018.01)]
*C03C 25/42* [(2006.01)]  *G02B 6/44* [(2006.01)]

(52) Cooperative Patent Classification (CPC):
C03C 25/1065; C03C 25/285; C03C 25/42;
G02B 6/44

(86) International application number:
PCT/JP2022/037342

(87) International publication number:
WO 2023/074295 (04.05.2023 Gazette 2023/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.10.2021 JP 2021174345

(71) Applicant: SUMITOMO ELECTRIC INDUSTRIES,
LTD.
Osaka-shi, Osaka 541-0041 (JP)

(72) Inventors:
• HAMAKUBO, Katsushi
Osaka-shi, Osaka 541-0041 (JP)
• IWAGUCHI, Noriaki
Osaka-shi, Osaka 541-0041 (JP)
• IKEGAWA, Miho
Osaka-shi, Osaka 541-0041 (JP)

(74) Representative: TBK
Bavariaring 4-6
80336 München (DE)

(54) **RESIN COMPOSITION FOR OPTICAL FIBER COATING, COLORED COATING MATERIAL FOR OPTICAL FIBER, AND OPTICAL FIBER**

(57) A resin composition for optical fiber coating contains a photopolymerizable compound and a photopolymerization initiator, in which the photopolymerizable compound contains epoxy di(meth)acrylate having a bisphenol skeleton and alkylene oxide-modified di(meth)acrylate having a bisphenol skeleton, and a mass ratio of a content of the alkylene oxide-modified di(meth)acrylate with respect to a content of the epoxy di(meth)acrylate is 0.3 or more and 8.0 or less.

*Fig.2*

## Description

### Technical Field

The present disclosure relates to a resin composition for optical fiber coating, a colored coating material for an optical fiber, and an optical fiber.

This application claims priority to Japanese Patent Application No. 2021-174345 filed October 26, 2021, the entire content of which is incorporated herein by reference.

### Background Art

An optical fiber has generally a coating resin layer for protecting a glass fiber that is an optical transmission medium. The coating resin layer has, for example, a primary resin layer and a secondary resin layer. An outermost layer of the coating resin layer includes a colored resin layer for identifying the optical fiber (see, for example, Patent Literatures 1 and 2).

### Citation List

### Patent Literature

Patent Literature 1: JP H6-242355 A
Patent Literature 2: WO 2016/047002 A1

### Summary of Invention

A resin composition for optical fiber coating according to one aspect of the present disclosure contains a photopolymerizable compound and a photopolymerization initiator, in which the photopolymerizable compound contains epoxy di(meth)acrylate having a bisphenol skeleton and alkylene oxide-modified di(meth)acrylate having a bisphenol skeleton, and a mass ratio of a content of the alkylene oxide-modified di(meth)acrylate with respect to a content of the epoxy di(meth)acrylate is 0.3 or more and 8.0 or less.

### Brief Description of Drawings

FIG. 1 is a schematic cross-sectional view illustrating an example of an optical fiber according to the present embodiment.
FIG. 2 is a schematic cross-sectional view illustrating an example of an optical fiber according to the present embodiment.

### Description of Embodiments

[Problems to be solved by the present disclosure]

In a long-term reliability test in which an optical fiber is immersed in oil such as mineral oil, the toughness of a coating resin layer may decrease, causing an increase in transmission loss of the optical fiber. An object of the present disclosure is to provide a resin composition and a colored coating material for an optical fiber with which a resin layer excellent in mineral oil resistance can be formed, and to provide an optical fiber in which an increase in transmission loss is reduced.

[Effects of the present disclosure]

According to the present disclosure, it is possible to provide a resin composition and a colored coating material for an optical fiber with which a resin layer excellent in mineral oil resistance can be formed, and to provide an optical fiber in which an increase in transmission loss is reduced.

[Description of embodiments of the present disclosure]

First, the contents of embodiments of the present disclosure will be listed and described.

(1) A resin composition for optical fiber coating according to one aspect of the present disclosure contains a photopolymerizable compound and a photopolymerization initiator, in which the photopolymerizable compound contains epoxy di(meth)acrylate having a bisphenol skeleton and alkylene oxide-modified di(meth)acrylate having a bisphenol skeleton, and a mass ratio of a content of the alkylene oxide-modified di(meth)acrylate with respect to a content of the epoxy di(meth)acrylate is 0.3 or more and 8.0 or less.

Such a resin composition uses, as a photopolymerizable compound, a (meth)acrylate compound having a specific structure instead of urethane (meth)acrylate commonly used, so that a resin layer excellent in mineral oil resistance can be formed.

(2) In the above (1), from the viewpoint of adjusting a Young's modulus of the resin layer, the alkylene oxide-modified di(meth)acrylate may have at least one selected from the group consisting of an ethylene oxide chain and a propylene oxide chain.

(3) In the above (1) or (2), from the viewpoint of coloring the resin layer, the resin composition according to the present embodiment may further contain titanium oxide.

(4) In the above (3), from the viewpoint of improving dispersibility in the resin composition, the titanium oxide may be surface-treated titanium oxide.

(5) In any one of the above (1) to (4), from the viewpoint of further reducing an increase in transmission loss of the optical fiber, a breaking elongation of a resin film obtained by curing the resin composition with an integrated light amount of 900 mJ/cm$^2$ or more and 1100 mJ/cm$^2$ or less may be 7% or more and 50% or less at 23°C, and a Young's modulus of the resin film may be 700 MPa or more and 2000 MPa or less at 23°C.

(6) A colored coating material for an optical fiber according to one aspect of the present disclosure contains the resin composition described in any one of the above (1) to (5). By using the resin composition according to the present embodiment for the colored resin layer, it is possible to form a coating resin layer in which an increase in transmission loss of the optical fiber can be reduced.

(7) An optical fiber according to one aspect of the present disclosure includes a glass fiber including a core and a cladding, a primary resin layer being in contact with the glass fiber and coating the glass fiber, a secondary resin layer coating the primary resin layer, and a colored resin layer coating the secondary resin layer, in which the colored resin layer contains a cured product of the resin composition described in any one of the above (1) to (5). By applying the resin composition according to the present embodiment to the colored resin layer, an increase in transmission loss of the optical fiber can be reduced.

(8) An optical fiber according to one aspect of the present disclosure includes a glass fiber including a core and a cladding, a primary resin layer being in contact with the glass fiber and coating the glass fiber, and a secondary resin layer coating the primary resin layer, in which the secondary resin layer contains a cured product of the resin composition described in any one of the above (1) to (5). By applying the resin composition according to the present embodiment to the secondary resin layer, an increase in transmission loss of the optical fiber can be reduced.

[Details of embodiments of the present disclosure]

Specific examples of the resin composition and the optical fiber according to embodiments of the present disclosure will be described with reference to the drawings as necessary. Note that, the present disclosure is not limited to these illustrations but is indicated by the claims and intended to include meanings equivalent to the claims and all modifications within the claims. In the following description, the same reference numerals are given to the same elements in the description of the drawing, and redundant description will be omitted. In the present specification, (meth)acrylate means an acrylate or its corresponding methacrylate. The same applies to other similar expressions such as (meth)acryloyl.

(Resin composition)

A resin composition according to the present embodiment contains a photopolymerizable compound and a photopolymerization initiator, in which the photopolymerizable compound contains epoxy di(meth)acrylate having a bisphenol skeleton and alkylene oxide-modified di(meth)acrylate having a bisphenol skeleton, and a mass ratio of a content of the alkylene oxide-modified di(meth)acrylate with respect to a content of the epoxy di(meth)acrylate is 0.3 or more and 8.0 or less.

As the epoxy (dimeta)acrylate according to the present embodiment, a reaction product of a diglycidyl ether compound having a bisphenol skeleton and a compound having a (meth)acryloyl group such as (meth)acrylic acid can be used.

Examples of the epoxy di(meth)acrylate include a (meth)acrylic acid adduct of bisphenol A diglycidyl ether, a (meth)acrylic acid adduct of bisphenol AF diglycidyl ether, and a (meth)acrylic acid adduct of bisphenol F diglycidyl ether.

From the viewpoint of increasing the strength of the resin layer, the content of the epoxy di(meth)acrylate may be 10% by mass or more and 70% by mass or less, 20% by mass or more and 60% by mass or less, or 30% by mass or more and 50% by mass or less, based on the total amount of the photopolymerizable compound.

The alkylene oxide-modified di(meth)acrylate according to the present embodiment preferably has at least one selected from the group consisting of an ethylene oxide (EO) chain and a propylene oxide (PO) chain, from the viewpoint of adjusting the Young's modulus of the resin layer. The ethylene oxide chain can be expressed as "(EO)n" and the propylene oxide chain can be expressed as "(PO)n". n is an integer of 1 or more, may be 2 or more or 3 or more, and may be 40 or less, 35 or less, or 30 or less.

Examples of the alkylene oxide-modified di(meth)acrylate include EO-modified di(meth)acrylate of bisphenol A, PO-modified di(meth)acrylate of bisphenol A, and EO.PO-modified di(meth)acrylate of bisphenol A.

When the mass ratio of the content of the alkylene oxide-modified di(meth)acrylate with respect to the content of the epoxy di(meth)acrylate is 0.3 or more and 8.0 or less, a resin layer excellent in mineral oil resistance can be formed. From the viewpoint of further improving mineral oil resistance, the mass ratio of the content of the alkylene oxide-modified di(meth)acrylate with respect to the content of the epoxy di(meth)acrylate may be 0.4 or more, 0.5 or more, or 1.0 or more, and may be 7.0 or less, 6.0 or less, or 5.0 or less.

The photopolymerizable compound according to the present embodiment can contain a photopolymerizable compound (hereinafter, referred to as "monomer") other than the epoxy di(meth)acrylate having a bisphenol skeleton and the alkylene oxide-modified di(meth)acrylate having a bisphenol skeleton.

As the monomer, a monofunctional monomer having one polymerizable group and a polyfunctional monomer having two or more polymerizable groups can be used. The monomer may be used as a mixture of two or more kinds thereof.

Examples of the monofunctional monomer include (meth)acrylate-based monomers such as methyl (meth)acrylate, ethyl (meth)acrylate, propyl (meth)acrylate, n-butyl (meth)acrylate, s-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 2-phenoxyethyl (meth)acrylate, 3-phenoxy benzyl acrylate, phenoxy diethyleneglycol acrylate, phenoxy polyethylene glycol acrylate, 4-tert-butylcyclohexanol acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, nonylphenoxypolyethylene glycol (meth)acrylate, and isobomyl (meth)acrylate; carboxy group-containing monomers such as (meth)acrylic acid, a (meth)acrylic acid dimer, carboxyethyl (meth)acrylate, carboxypentyl (meth)acrylate, and ω-carboxy-polycaprolactone (meth)acrylate; heterocycle-containing monomers such as N-(meth)acryloylmorpholine, N-vinylpyrrolidone, N-vinylcaprolactam, N-(meth)acryloylpiperidine, N-(meth)acryloylpyrrolidine, 3-(3-pyridine)propyl (meth)acrylate, and cyclic trimethylolpropane formal acrylate; maleimide-based monomers such as maleimide, N-cyclohexylmaleimide, and N-phenylmaleimide; amide-based monomers such as (meth)acrylamide, N,N-dimethyl (meth)acrylamide, N,N-diethyl (meth)acrylamide, N-hexyl (meth)acrylamide, N-methyl (meth)acrylamide, N-ethyl (meth)acrylamide, N-butyl (meth)acrylamide, N-methylol (meth)acrylamide, and N-methylolpropane (meth)acrylamide; aminoalkyl (meth)acrylate-based monomers such as aminoethyl (meth)acrylate, aminopropyl (meth)acrylate, N,N-dimethylaminoethyl (meth)acrylate, and tert-butylaminoethyl (meth)acrylate; and succinimide-based monomers such as N-(meth)acryloyloxymethylene succinimide, N-(meth)acryloyl-6-oxyhexamethylene succinimide, and N-(meth)acryloyl-8-oxyoctamethylene succinimide.

Examples of the polyfunctional monomer include ethylene glycol di(meth)acrylate, polyethylene glycol di(meth)acrylate, polypropylene glycol di(meth)acrylate, neopentyl glycol di(meth)acrylate, tripropylene glycol di(meth)acrylate, tetraethylene glycol di(meth)acrylate, hydroxypivalic acid neopentyl glycol di(meth)acrylate, 1,4-butanediol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-hexadecanediol di(meth)acrylate, 1,20-eicosanediol di(meth)acrylate, isopentyldiol di(meth)acrylate, 3-ethyl-1,8-octanediol di(meth)acrylate, trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxy polypropoxy tri(meth)acrylate, tris[(meth)acryloyloxyethyl]isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl]isocyanurate.

The photopolymerization initiator can be appropriately selected from known radical photopolymerization initiators for use. Examples of the photopolymerization initiator include 1-hydroxycyclohexyl phenyl ketone (Omnirad 184, manufactured by IGM Resins), 2,2-dimethoxy-2-phenylacetophenone, 1-(4-isopropylphenyl)-2-hydroxy-2-methylpropane-1-one, bis(2,6-dimethoxybenzoyl)-2,4,4-trimethylpentylphosphine oxide, 2-methyl-1-[4-(methylthio)phenyl]-2-morpholino-propane-1-one (Omnirad 907, manufactured by IGM Resins), 2,4,6-trimethylbenzoyl diphenylphosphine oxide (Omnirad TPO, manufactured by IGM Resins), and bis(2,4,6-trimethylbenzoyl)phenylphosphine oxide (Omnirad 819, manufactured by IGM Resins).

The content of the photopolymerization initiator may be 0.2% by mass or more and 10% by mass or less, 0.4% by mass or more and 8% by mass or less, or 0.6% by mass or more and 6% by mass or less, based on the total amount of the photopolymerizable compound. That is, the content of the photopolymerization initiator may be 0.2 parts by mass or more and 10 parts by mass or less, 0.4 parts by mass or more and 8 parts by mass or less, or 0.6 parts by mass or more and 6 parts by mass or less, with respect to 100 parts by mass of the total amount of the photopolymerizable compound.

The resin composition may further contain a silane coupling agent, a leveling agent, an antifoaming agent, an antioxidant, a sensitizer, and the like.

The silane coupling agent is not particularly limited as long as it causes no inhibition in curing of the resin composition. Examples of the silane coupling agent include tetramethyl silicate, tetraethyl silicate, mercaptopropyl tri-methoxysilane, vinyltrichlorosilane, vinyltriethoxysilane, vinyltris($\beta$-methoxy-ethoxy)silane, $\beta$-(3,4-epoxylcyclohexyl)-ethyltrimethoxysilane, dimethoxydimethylsilane, diethoxydimethylsilane, 3-acryloxypropyl trimethoxysilane, $\gamma$-glycidoxypropyl trimethoxysilane, $\gamma$-glycidoxypropylmethyl diethoxysilane, $\gamma$-methacryloxypropyl trimethoxysilane, N-($\beta$-aminoethyl)-$\gamma$-aminopropyl trimethoxysilane, N-($\beta$-aminoethyl)-$\gamma$-aminopropyltrimethyl dimethoxysilane, N-phenyl-$\gamma$-aminopropyl trimethoxysilane, $\gamma$-chloropropyl trimethoxysilane, $\gamma$-mercaptopropyl trimethoxysilane, $\gamma$-aminopropyl trimethoxysilane, bis-[3-(triethoxysilyl)propyl]tetrasulfide, bis-[3-(triethoxysilyl)propyl] disulfide, $\gamma$-trimethoxysilylpropyl dimethylthiocarbamyl tetrasulfide, and $\gamma$-trimethoxysilylpropyl benzothiazyl tetrasulfide.

From the viewpoint of coloring the resin layer, the resin composition according to the present embodiment can further contain titanium oxide particles. As the titanium oxide particles, surface-treated titanium oxide particles may be used. The surface-treated titanium oxide particles are particles in which titanium oxide is surface-treated with an inorganic substance, and have excellent dispersibility in the resin composition.

Examples of the inorganic substance used for the surface treatment include aluminum oxide, silicon dioxide, and zirconium dioxide. When the surface-treated titanium oxide particles have a surface-treated layer containing at least one selected from the group consisting of aluminum oxide, silicon dioxide, and zirconium dioxide, dispersibility can be further improved. The surface-treated layer may be formed on at least a portion of the surface of titanium oxide, and may be formed on the entire surface of titanium oxide. The surface-treated layer is formed by the surface treatment of titanium oxide.

The amount of the surface-treated layer in the surface-treated titanium oxide particles may be 1% by mass or more, 1.5% by mass or more, or 2% by mass or more from the viewpoint of improving dispersibility, and may be 10% by mass or less, 9% by mass or less, or 8% by mass or less from the viewpoint of increasing hiding power. The amount of the surface-treated layer can be calculated by measuring the amount of the titanium element and an inorganic element other than titanium contained in the surface-treated titanium oxide particles using inductively coupled mass spectrometry (ICP-MS).

The average primary particle diameter of the surface-treated titanium oxide particles may be 300 nm or less, 295 nm or less, or 290 nm or less, from the viewpoint of further improving the lateral pressure resistance of the coating resin layer. From the viewpoint of increasing hiding power, the average primary particle diameter of the surface-treated titanium oxide particles may be 100 nm or more, 150 nm or more, or 200 nm or more, and is preferably 200 nm or more and 300 nm or less. The average primary particle diameter can be measured, for example, by image analysis of electron micrographs, a light scattering method, a BET method, or the like.

The content of the surface-treated titanium oxide particles may be 0.6% by mass or more, 0.8% by mass or more, 1% by mass or more, 1.5% by mass or more, 2% by mass or more, or 3% by mass or more, based on the total amount of the resin composition, from the viewpoint of improving the visibility of the resin layer. The content of the surface-treated titanium oxide particles may be less than 25% by mass, 24% by mass or less, 20% by mass or less, 18% by mass or less, or 10% by mass or less, based on the total amount of the resin composition, from the viewpoint of increasing the curability of the resin composition.

When a breaking elongation of a resin film obtained by curing the resin composition according to the present embodiment with an integrated light amount of 900 mJ/cm$^2$ or more and 1100 mJ/cm$^2$ or less is 6% or more and 50% or less at 23°C, a resin layer excellent in toughness can be formed. The breaking elongation of the resin film may be 6.5% or more, 7% or more, or 10% or more, and may be 45% or less, 40% or less, or 30% or less.

When the Young's modulus of the resin film is 700 MPa or more and 2000 MPa or less at 23°C, a resin layer excellent in toughness can be formed. The Young's modulus of the resin film may be 750 MPa or more, 800 MPa or more, or 850 MPa or more, and may be 1950 MPa or less, 1900 MPa or less, or 1850 MPa or less.

The resin composition according to the present embodiment can be suitably used as a colored coating material for an optical fiber. By forming an outermost layer of the coating resin layer using the colored coating material containing the resin composition according to the present embodiment, an increase in transmission loss of the optical fiber can be reduced.

(Optical fiber)

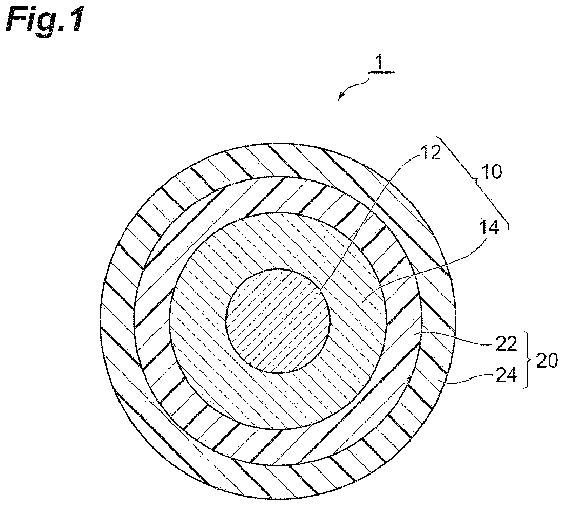

FIG. 1 is a schematic cross-sectional view illustrating a configuration of an optical fiber according to an embodiment. As illustrated in FIG. 1, an optical fiber 1 of the present embodiment includes a glass fiber 10 and a coating resin layer 20 being in contact with the glass fiber 10 and covering an outer periphery of the glass fiber 10.

The glass fiber 10 is a light guiding optical transmission medium that transmits light introduced to the optical fiber 1. The glass fiber 10 is a member made of glass, and is configured, for example, with silica ($SiO_2$) glass as a base material (main component). The glass fiber 10 includes a core 12 and a cladding 14 covering the core 12. The glass fiber 10 transmits light introduced to the optical fiber 1. The core 12 is provided, for example, in an area including a center axis line of the glass fiber 10. The core 12 is made of, for example, pure $SiO_2$ glass, or $SiO_2$ glass containing $GeO_2$, a fluorine element, or the like. The cladding 14 is provided in an area surrounding the core 12. The cladding 14 has a refractive index lower than a refractive index of the core 12. The cladding 14 is made of, for example, pure $SiO_2$ glass, or $SiO_2$ glass added with a fluorine element. The outer diameter of the glass fiber 10 is about 100 $\mu$m to 125 $\mu$m, and the diameter of the core 12 constituting the glass fiber 10 is about 7 $\mu$m to 15 $\mu$m.

The coating resin layer 20 is an ultraviolet curable resin layer covering the cladding 14. The coating resin layer 20 includes a primary resin layer 22 coating an outer periphery of the glass fiber 10, and a secondary resin layer 24 coating an outer periphery of the primary resin layer 22. The primary resin layer 22 is in contact with an outer peripheral surface of the cladding 14 and coats the entire cladding 14. The secondary resin layer 24 is in contact with an outer peripheral surface of the primary resin layer 22 and coats the entire primary resin layer 22. The thickness of the primary resin layer 22 is, for example, 10 $\mu$m or more and 50 $\mu$m or less. The thickness of the secondary resin layer 24 is, for example, 10 $\mu$m or more and 40 $\mu$m or less.

The resin composition according to the present embodiment can be applied to the secondary resin layer 24. The secondary resin layer 24 can be formed by curing the above-described resin composition. Since the secondary resin layer 24 contains a cured product of the resin composition according to the present embodiment, when the rewinding work is performed from the large bobbin to the small bobbin, it is possible to prevent the surface of the secondary resin layer from being damaged and the resin layer from being broken.

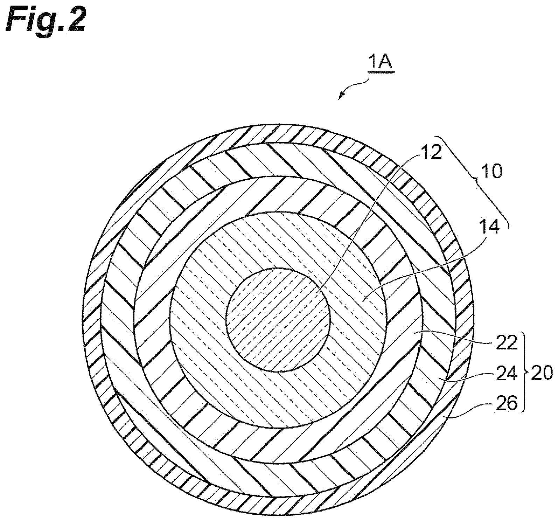

The coating resin layer 20 may further include a colored resin layer 26 coating an outer periphery of the secondary resin layer 24. FIG. 2 is a schematic cross-sectional view illustrating a configuration of an optical fiber according to an embodiment. As illustrated in FIG. 2, an optical fiber 1A of the present embodiment includes a glass fiber 10 and a coating resin layer 20 being in contact with the glass fiber 10 and covering an outer periphery of the glass fiber 10. The coating resin layer 20 includes a primary resin layer 22, a secondary resin layer 24, and a colored resin layer 26. The thickness of the colored resin layer 26 is, for example, 3 $\mu$m or more and 10 $\mu$m or less.

The resin composition according to the present embodiment can be applied to the colored resin layer 26. The colored resin layer 26 can be formed by curing the above-described resin composition. When the colored resin layer 26 contains a cured product of the resin composition according to the present embodiment, the lateral pressure characteristics of the optical fiber can be improved. The secondary resin layer 24 in the optical fiber 1A may not contain titanium particles, and can be formed, for example, by curing a resin composition containing urethane (meth)acrylate, a monomer, and a photopolymerization initiator. For the resin composition for a secondary resin layer in this case, conventionally known techniques can be used.

The primary resin layer 22 can be formed, for example, by curing a resin composition containing urethane (meth)acrylate, a monomer, a photopolymerization initiator, and a silane coupling agent. For the resin composition for a primary resin layer, conventionally known techniques can be used.

**Examples**

The following will describe the present disclosure in further detail with showing results of evaluation tests using Examples according to the present disclosure and Comparative Examples. Note that, the present invention is not limited to these Examples.

[Resin composition for colored resin layer]

As a photopolymerizable compound, epoxy acrylate (EA), which is a reaction product of an acrylic acid adduct of bisphenol A diglycidyl ether, and EO-modified di(meth)acrylate of bisphenol A shown in Table 1 were prepared.

[Table 1]

|  | EO-1 | EO-2 | EO-3 | EO-4 | EO-5 |
|---|---|---|---|---|---|
| (EO)n | 3 | 4 | 10 | 20 | 30 |

As a photopolymerization initiator, 2,4,6-trimethylbenzoyl diphenylphosphine oxide (Omnirad TPO) and 1-hydroxycyclohexyl phenyl ketone (Omnirad 184) were prepared.

As titanium oxide particles, surface-treated titanium oxide particles having a surface-treated layer containing aluminum oxide ($Al_2O_3$) were prepared. The average primary particle diameter of the surface-treated titanium oxide particles was 200 to 300 nm, and the amount of $Al_2O_3$ calculated by ICP-MS measurement was 2.5% by mass.

After mixing the photopolymerizable compound and the photopolymerization initiator in the blending amount (parts by mass) shown in Table 2, mixing was performed so that the content of surface-treated titanium oxide particles in the resin composition was 5% by mass, thereby preparing a resin composition. Test Examples 1 to 10 correspond to Examples, and Test Example 11 and 12 correspond to Comparative Examples.

(Young's modulus)

A resin composition was applied onto a polyethylene terephthalate (PET) film by using a spin coater, and then cured by using an electrodeless UV lamp system ("VPS600 (D valve)" manufactured by Heraeus K. K.) under the conditions of $1000 \pm 100$ mJ/cm$^2$ to form a resin layer having a thickness of $50 \pm 5$ $\mu$m on the PET film. The resin layer was peeled off from the PET film to obtain a resin film.

The resin film was punched into a dumbbell shape of JIS K 7127 Type 5, and pulled under the conditions of $23 \pm 2$°C and $50 \pm 10$% RH using a tensile tester at a tension rate of 1 mm/min and a gauge line distance of 25 mm to obtain a stress-strain curve. The Young's modulus was determined from 2.5% secant line.

(Breaking elongation)

A resin layer having a thickness of $50 \pm 5$ $\mu$m was formed on a PET film by the same operation as in the production of the resin film described above. The resin layer was peeled off from the PET film to obtain a resin film. The resin film was punched into a dumbbell shape of JIS Z 6251 Type 3, and pulled under the conditions of $23 \pm 2$°C and $50 \pm 10$% RH using a material tester 5985 manufactured by INSTRON at a speed of 1 mm/min. The breaking elongation was measured with a high-precision video elongation meter AVE manufactured by INSTRON.

(Resin composition for primary resin layer)

Urethane acrylate obtained by reacting polypropylene glycol having a molecular weight of 4000, isophorone diisocyanate, hydroxyethyl acrylate, and methanol was prepared. 75 parts by mass of this urethane acrylate, 12 parts by mass of nonylphenol EO-modified acrylate, 6 parts by mass of N-vinylcaprolactam, 2 parts by mass of 1,6-hexanediol diacrylate, 1 part by mass of Omnirad TPO, and 1 part by mass of 3 -mercaptopropyl trimethoxysilane were mixed to prepare a resin composition P.

(Resin composition for secondary resin layer)

40 parts by mass of urethane acrylate, which is a reaction product of polypropylene glycol having a molecular weight of 600, 2,4-tolylene diisocyanate, and 2-hydroxyethyl acrylate, 35 parts by mass of isobomyl acrylate, 24 parts by mass of epoxy acrylate, which is an acrylic acid adduct of bisphenol A diglycidyl ether, 1 part by mass of Omnirad TPO, and 1 part by mass of Omnirad 184 were mixed to prepare a resin composition S.

[Production of optical fiber]

A primary resin layer having a thickness of 17.5 $\mu$m was formed using the resin composition P on the outer periphery of the glass fiber having a diameter of 125 $\mu$m and composed of a core and a cladding, and a secondary resin layer having a thickness of 15 $\mu$m was further formed using the resin composition S on the outer periphery thereof, thereby producing an optical fiber. Next, after temporarily winding the optical fiber, a colored resin layer having a thickness of 5 $\mu$m was formed using the resin composition of each of Test Examples 1 to 12 on the outer periphery of the secondary resin layer while feeding out the optical fiber again by a coloring machine, thereby producing an optical fiber (hereinafter, referred to as "colored optical fiber") having a diameter of 200 μm and having the colored resin layer. The linear speed at the time of forming each resin layer was set to 1500 m/min.

(Young's modulus)

The Young's modulus of the secondary resin layer was determined from 2.5% secant line value by performing a tensile test (distance between marked lines: 25 mm) at 23°C using a pipe-shaped coating resin layer (length: 50 mm or more) obtained by immersing an optical fiber in a solvent (ethanol : acetone = 3 : 7) and pulling a glass fiber out. The Young's modulus of the secondary resin layer was 1100 MPa.

The Young's modulus of the primary resin layer was measured by the Pullout Modulus (POM) method at 23°C. Two parts of an optical fiber were fixed with two chuck devices, a portion of the coating resin layer (the primary resin layer and the secondary resin layer) between the two chuck devices was removed, and then one chuck device was fixed and another chuck device was slowly moved in the opposite direction of the fixed chuck device. In a case where the length of the portion sandwiched between the chuck devices to be moved in the optical fiber was designated as "L", the amount of movement of the chuck was designated as "Z", the outer diameter of the primary resin layer was designated as "Dp", the outer diameter of the glass fiber was designated as "Df", the Poisson's ratio of the primary resin layer was designated as "n", and the load during movement of the chuck device was designated as "W", the Young's modulus of the primary resin layer was determined. The Young's modulus of the primary resin layer was 0.2 MPa.

$$\text{Young's modulus (MPa)} = ((1 + n)W/\pi LZ) \times \ln(Dp/Df)$$

(Mineral oil test)

A 1000 m bundle of a colored optical fiber was immersed for 30 days in mineral oil that had been heated to 85°C, and then the transmission loss of light having a wavelength of 1550 nm was measured by the OTDR method. A case where a difference between the transmission loss before immersion in mineral oil and the transmission loss after immersion was 0.04 dB/km or less was evaluated as "A", and a case where the difference was more than 0.04 dB/km was evaluated as "B".

[Table 2]

| Test Example | | 1 | 2 | 3 | 4 | 5 | 6 | 7 | 8 | 9 | 10 | 11 | 12 |
|---|---|---|---|---|---|---|---|---|---|---|---|---|---|
| EO-1 | n = 3 | 80 | - | - | - | - | - | - | - | - | - | - | - |
| EO-2 | n = 4 | - | 80 | - | 70 | 73 | 75 | 65 | 55 | 45 | 30 | 90 | 15 |
| EO-3 | n = 10 | - | - | 80 | - | - | - | - | - | - | - | - | - |
| EO-4 | n = 20 | - | - | - | 10 | - | - | - | - | - | - | - | - |
| EO-5 | n = 30 | - | - | - | - | 10 | 10 | - | - | - | - | - | - |
| EA | | 20 | 20 | 20 | 20 | 17 | 25 | 35 | 45 | 55 | 70 | 10 | 85 |
| (EO)/EA | | 4.0 | 4.0 | 4.0 | 4.0 | 4.9 | 3.4 | 1.9 | 1.2 | 0.8 | 0.4 | 9.0 | 0.2 |
| Omnirad 184 | | 4 | 4 | 4 | 4 | 4 | 4 | 4 | 4 | 4 | 4 | 4 | 4 |
| Omnirad TPO | | 1 | 1 | 1 | 1 | 1 | 1 | 1 | 1 | 1 | 1 | 1 | 1 |
| $TiO_2$ (% by mass) | | 5 | 5 | 5 | 5 | 5 | 5 | 5 | 5 | 5 | 5 | 5 | 5 |
| Breaking elongation (%) | | 7 | 8 | 12 | 16 | 40 | 40 | 8 | 8 | 8 | 8 | 5 | 7 |
| Young's modulus (MPa) | | 1050 | 1000 | 720 | 900 | 800 | 800 | 1200 | 1400 | 1800 | 1900 | 750 | 2100 |
| Mineral oil test | | A | A | A | A | A | A | A | A | A | A | B | B |

**Reference Signs List**

1, 1A: Optical fiber
10: Glass fiber
12: Core
14: Cladding
20: Coating resin layer
22: Primary resin layer
24: Secondary resin layer
26: Colored resin layer

**Claims**

1. A resin composition for optical fiber coating, the resin composition comprising a photopolymerizable compound and a photopolymerization initiator,
   wherein the photopolymerizable compound contains epoxy di(meth)acrylate having a bisphenol skeleton and alkylene oxide-modified di(meth)acrylate having a bisphenol skeleton, and a mass ratio of a content of the alkylene oxide-modified di(meth)acrylate with respect to a content of the epoxy di(meth)acrylate is 0.3 or more and 8.0 or less.

2. The resin composition according to claim 1, wherein the alkylene oxide-modified di(meth)acrylate has at least one selected from the group consisting of an ethylene oxide chain and a propylene oxide chain.

3. The resin composition according to claim 1 or 2, further comprising titanium oxide.

4. The resin composition according to claim 3, wherein the titanium oxide is surface-treated titanium oxide.

5. The resin composition according to any one of claims 1 to 4, wherein a breaking elongation of a resin film obtained by curing the resin composition with an integrated light amount of 900 mJ/cm$^2$ or more and 1100 mJ/cm$^2$ or less is 6% or more and 50% or less at 23°C, and a Young's modulus of the resin film is 700 MPa or more and 2000 MPa or less at 23°C.

6. A colored coating material for an optical fiber, the colored coating material comprising the resin composition according to any one of claims 1 to 5.

7. An optical fiber comprising:

   a glass fiber including a core and a cladding;
   a primary resin layer being in contact with the glass fiber and coating the glass fiber;
   a secondary resin layer coating the primary resin layer; and
   a colored resin layer coating the secondary resin layer,
   wherein the colored resin layer contains a cured product of the resin composition according to any one of claims 1 to 5.

8. An optical fiber comprising:

   a glass fiber including a core and a cladding;
   a primary resin layer being in contact with the glass fiber and coating the glass fiber; and
   a secondary resin layer coating the primary resin layer,
   wherein the secondary resin layer contains a cured product of the resin composition according to any one of claims 1 to 5.

*Fig.1*

*Fig.2*

| INTERNATIONAL SEARCH REPORT | International application No. |
|---|---|
| | **PCT/JP2022/037342** |

**A.    CLASSIFICATION OF SUBJECT MATTER**

*C03C 25/1065*(2018.01)i; *C03C 25/285*(2018.01)i; *C03C 25/42*(2006.01)i; *G02B 6/44*(2006.01)i
FI:    C03C25/285; C03C25/1065; C03C25/42; G02B6/44 301A

According to International Patent Classification (IPC) or to both national classification and IPC

**B.    FIELDS SEARCHED**

Minimum documentation searched (classification system followed by classification symbols)

C03C25/00-25/70; G02B6/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2021/145103 A1 (SUMITOMO ELECTRIC INDUSTRIES, LTD.) 22 July 2021 (2021-07-22) paragraphs [0045], [0073], [0075], tables 1-2, examples 1-11, comparative example 3 | 1-2, 8 |
| A | | 3-7 |
| X | WO 2021/145102 A1 (SUMITOMO ELECTRIC INDUSTRIES, LTD.) 22 July 2021 (2021-07-22) paragraphs [0042], [0070], [0072], table 2, example 12 | 1-2, 8 |
| A | | 3-7 |
| X | WO 2021/145104 A1 (SUMITOMO ELECTRIC INDUSTRIES, LTD.) 22 July 2021 (2021-07-22) paragraphs [0043], [0072], [0074], table 2, example 11 | 1-2, 8 |
| A | | 3-7 |

☑ Further documents are listed in the continuation of Box C.          ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **17 November 2022** | **06 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/037342** |

**C.     DOCUMENTS CONSIDERED TO BE RELEVANT**

| Category* | Citation of document, with indication, where appropriate, of the relevant passages | Relevant to claim No. |
| --- | --- | --- |
| X | JP 2015-182912 A (SUMITOMO ELECTRIC INDUSTRIES, LTD.) 22 October 2015 (2015-10-22) claims, paragraphs [0052], [0058], table 1, example 6 | 1-2, 6 |
| Y | | 3-4 |
| A | | 5, 7-8 |
| Y | JP 2017-095531 A (SAKATA INKS) 01 June 2017 (2017-06-01) paragraph [0062] | 3-4 |
| A | | 5, 7 |
| Y | JP 2012-021055 A (PILOT INK CO LTD) 02 February 2012 (2012-02-02) paragraph [0006] | 3-4 |
| A | | 5, 7 |
| A | WO 2019/064659 A1 (UNIV HOKKAIDO NAT UNIV CORP) 04 April 2019 (2019-04-04) paragraph [0091] | 1-8 |

Form PCT/ISA/210 (second sheet) (January 2015)

## INTERNATIONAL SEARCH REPORT
### Information on patent family members

International application No.

**PCT/JP2022/037342**

| Patent document cited in search report | | | Publication date (day/month/year) | Patent family member(s) | Publication date (day/month/year) |
|---|---|---|---|---|---|
| WO | 2021/145103 | A1 | 22 July 2021 | (Family: none) | |
| WO | 2021/145102 | A1 | 22 July 2021 | (Family: none) | |
| WO | 2021/145104 | A1 | 22 July 2021 | (Family: none) | |
| JP | 2015-182912 | A | 22 October 2015 | (Family: none) | |
| JP | 2017-095531 | A | 01 June 2017 | (Family: none) | |
| JP | 2012-021055 | A | 02 February 2012 | (Family: none) | |
| WO | 2019/064659 | A1 | 04 April 2019 | (Family: none) | |

Form PCT/ISA/210 (patent family annex) (January 2015)

**EP 4 424 652 A1**

**Patent documents cited in the description**

- JP 2021174345 A
- JP H6242355 A
- WO 2016047002 A1